# EUROPEAN PATENT SPECIFICATION

(11) **EP 3 490 215 B1**
(45) Date of publication and mention of the grant of the patent: **22.09.2021**
(21) Application number: 17830423.4
(22) Date of filing: 14.07.2017
(51) Int. Cl.: H04L 29/06, G06F 21/31, G06F 21/62, G06Q 20/40

(54) **METHOD AND DEVICE FOR CONTROLLING SERVICE OPERATION RISK**
VERFAHREN UND VORRICHTUNG ZUR KONTROLLE EINES DIENSTBETRIEBSRISIKOS
PROCÉDÉ ET DISPOSITIF DE LIMITATION DU RISQUE D'UNE OPÉRATION DE SERVICE

(30) Priority: 22.07.2016 CN 201610587509
(43) Date of publication of application: 29.05.2019
(73) Proprietor: Advanced New Technologies Co., Ltd., George Town, Grand Cayman KY1-9008 (KY)
(72) Inventor: XIA, Jupeng, Hangzhou Zhejiang 311121 (CN); LI, Caiwei, Hangzhou Zhejiang 311121 (CN); GU, Xi, Hangzhou Zhejiang 311121 (CN); JIANG, Bao, Hangzhou Zhejiang 311121 (CN)
(74) Representative: Fish & Richardson P.C.
(86) International application number: PCT/CN2017/092942
(87) International publication number: WO 2018/014789

(56) References cited:
- EP-A1- 3 208 759
- CN-A- 103 745 397
- CN-A- 104 318 138
- CN-A- 105 279 405
- CN-A- 105 512 938
- CN-A- 106 878 236
- US-A1- 2009 199 296
- US-A1- 2012 204 257
- US-A1- 2013 304 677
- US-A1- 2015 281 200
- US-A1- 2015 286 820

## Description

### TECHNICAL FIELD

The present application relates to the field of computer technologies, and in particular, to a method and device for controlling service operation risks.

### BACKGROUND

With the development of information technologies, users can not only obtain corresponding services from network platforms provided by service providers, but also from other users.

Currently, a service demanding user (referred to as a first user) and a service provider user (referred to as a second user) can perform service interaction by using both conventional online method and offline method. For the offline method, an end-user device used by the first user can be disconnected from the network. The end-user device provides offline service information such as an account identifier and a verification identifier corresponding to the first user for the second user by using a two-dimensional code, sound wave, or near field communication. The second user can send the offline service information of the first user to a corresponding server, so the second user can obtain service resources in the first user's account and provide a corresponding service for the first user.

In the existing technologies, in the previous offline service method, an identity verification mechanism in the end-user device used by the first user can ensure security of the first user's account. The first user can unlock the end-user device by using a fingerprint, an unlock password, or a PIN code, to pass identity verification on the end-user device. In other words, the end-user device can perform the previous offline service operation only after the end-user device passes identity verification. For example, in offline payment scenarios, after a merchant generates a payment order, a user can perform identity verification on a mobile phone by using a fingerprint or password. After verification succeeds, a payment code is invoked and displayed on the mobile phone. Then, the merchant can scan the payment code displayed on the mobile phone and complete offline payment.

However, in the existing technologies, the identity verification mechanism in the end-user device is the only guarantee of the first user's account security. If the end-user device is held by an unauthorized user, once the unauthorized user unlocks the end-user device by making multiple attempts or by using other methods, the end-user device considers that the user has passed identity verification. Consequently the unauthorized user can use the end-user device to perform offline service operations, which causes a serious threat to the account security of the first user. Obviously, the identity verification mechanism in the end-user device has certain limitations, especially in offline service scenarios, and security level is relatively low. US 2015/281200 describes a technology for enabling passive enforcement of security at computing systems. A component of a computing system can passively authenticate or authorize a user based on observations of the user's interactions with the computing system. The technology may increase or decrease an authentication or authorization level based on the observations. The level can indicate what level of access the user should be granted. When the user or a component of the computing device initiates a request, an application or service can determine whether the level is sufficient to satisfy the request. If the level is insufficient, the application or service can prompt the user for credentials so that the user is actively authenticated.
US 2009/199296 describes techniques for detecting unauthorized use (e.g., malicious attacks) of computing systems. Unauthorized use can be detected based on patterns of use (e.g., behavioral patterns of use typically associated with a human being) of the computing systems. Acceptable behavioral pattern data can be generated for a computing system by monitoring the use of a support system (e.g., an operating system, a virtual environment) operating on the computing system.
US 2013/304677 describes methods for generating data models in a client-cloud communication system may include applying machine learning techniques to generate a first family of classifier models that describe a cloud corpus of behavior vectors. Such vectors may be analyzed to identify factors in the first family of classifier models that have the highest probably of enabling a mobile device to conclusively determine whether a mobile device behavior is malicious or benign.
US 2012/204257 describes a processor that can receive data indicative of interactions between a user and a touchscreen-equipped electronic device. The processor can compare a behavior pattern in the received data and a behavior pattern in previously stored data contained within a user profile for a human. The processor can generate a score indicative of a likelihood that the behavior pattern in the received data matches the behavior pattern in the previously stored data. Responsive to the generated score being below a threshold, the processor can generate an indication of a possible fraudulent action due to the user having a high likelihood of not being the human.

### SUMMARY

The invention is defined in the appended claims. Implementations of the present application provide a method for controlling service operation risks, to ensure security of an identity verification mechanism in an end-user device in offline service scenarios.

The implementations of the present application also provide a device for controlling service operation risks, to ensure security of an identity verification mechanism in an end-user device in offline service scenarios.

Compared with the existing technologies, by using the previous method in the implementations of the present application, when a user performs an offline service, a process of performing risk control processing on a service operation of the user is added in addition to identity verification of the application, to form a double guarantee mechanism, thereby effectively improving security in offline service environments.

### BRIEF DESCRIPTION OF DRAWINGS

The accompanying drawings described here are intended to provide a further understanding of the present application, and constitute a part of the present application. The illustrative implementations of the present application and descriptions thereof are intended to describe the present application, and do not constitute limitations on the present application. In the accompanying drawings:
FIG. 1a is a schematic architecture diagram illustrating an offline service, according to an implementation of the present application;
FIG. 1b is a process for controlling service operation risks, according to an implementation of the present application;
FIG. 2a and FIG. 2b are schematic diagrams illustrating verification methods in a process for controlling service operation risks, according to an implementation of the present application;
FIG. 3 is another process for controlling service operation risks, according to an implementation of the present application;
FIG. 4 is a schematic structural diagram illustrating a device for controlling service operation risks, according to an implementation of the present application; and
FIG. 5 is a schematic structural diagram illustrating a device for controlling service operation risks, according to an implementation of the present application.

### DESCRIPTION OF IMPLEMENTATIONS

To make the objectives, technical solutions, and advantages of the present application clearer, the following clearly and comprehensively describes the technical solutions of the present application with reference to the implementations of the present application and corresponding accompanying drawings. Apparently, the described implementations are merely some but not all of the implementations of the present application. All other implementations obtained by a person of ordinary skill in the art based on the implementations of the present application without creative efforts shall fall within the protection scope of the present application.

As described above, in an offline service operation scenario, an application used by a user has a corresponding identity verification mechanism, but the identity verification mechanism of the application is the only guarantee of a user account's security. Once another user passes identity verification of the application, the another user can use the application to perform any offline service operation, thereby causing a serious security threat to the user account.

Based on this, a method for improving application security in an offline service environment is needed. Therefore, in the implementations of the present application, a method for controlling service operation risks is provided. In the offline service scenario, even if a current user of an end-user device passes identity verification of an application, risk determining can be performed based on a service operation initiated by the user, to minimize the security risk caused to a user account after an unauthorized user passes identity verification of the application.

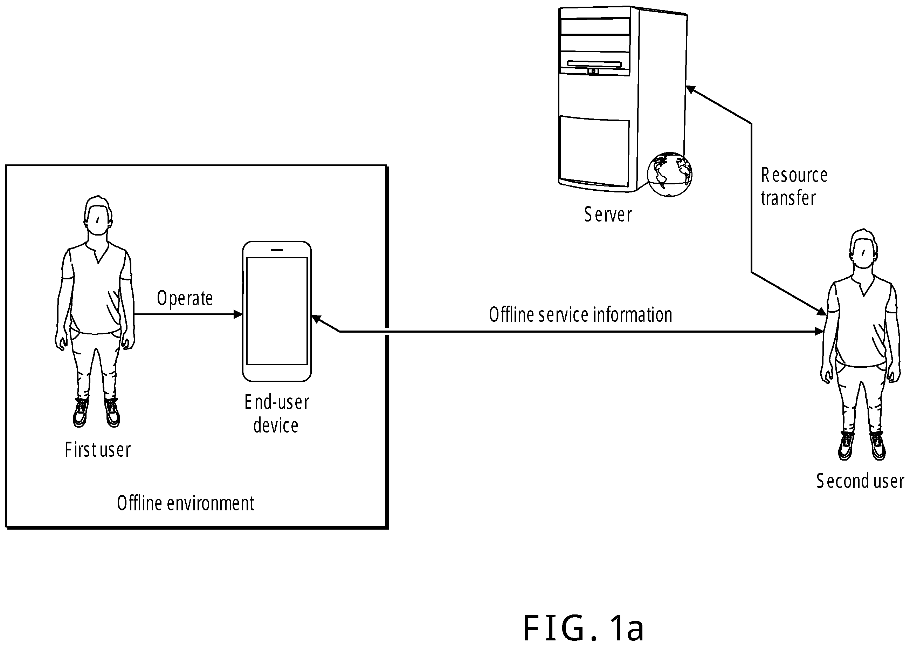

In the implementations of the present application, the end-user device includes but is not limited to a smartphone, a smartwatch, a tablet computer, a notebook computer, and a desktop computer. FIG. 1a shows a schematic diagram illustrating a relationship architecture of an offline service in actual applications, according to an implementation of the present application. As shown in FIG. 1a, a user uses an end-user device, a merchant obtains offline service information of the user, and a server transfers a resource (resource that has a payment feature, such as an amount, a coupon, and a virtual currency) from the user's account to the merchant's account.

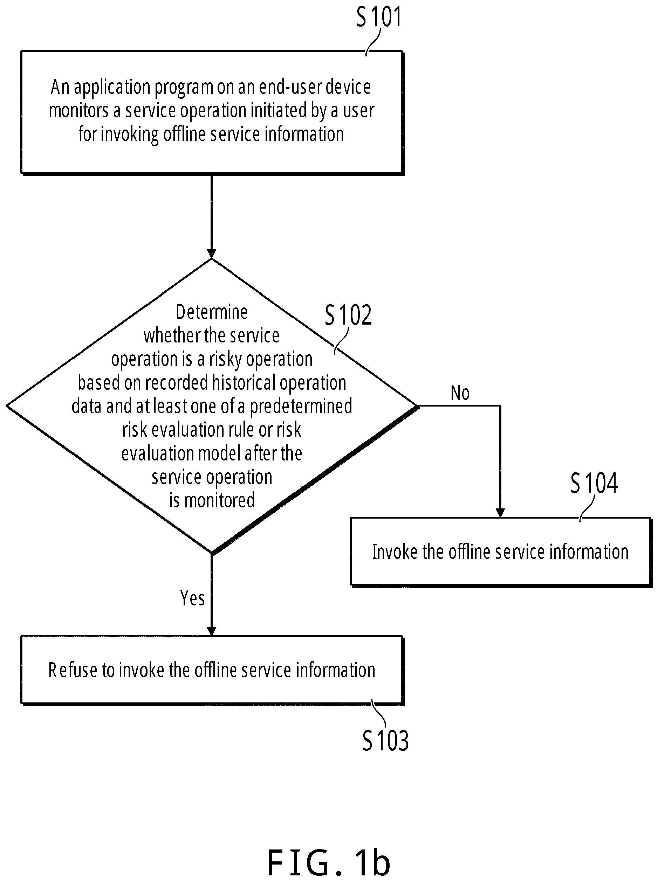

FIG. 1b shows a process for controlling service operation risks, according to an implementation of the present application, which includes the following steps:

S101. An application program on an end-user device monitors a service operation initiated by a user for invoking offline service information.

The offline service information is information needed for performing an offline service, and usually includes information such as user account information and a service verification identifier. In actual application scenarios, the offline service information can usually be in a form such as a near field communication (NFC) signal, a unique digital object identifier (DOI), and a sound wave signal. It does not constitute a limitation on the present application.

The service operation triggers the offline service. For example, the user can click the "offline payment" function control element of the application, and the click operation can trigger an offline payment service. In this case, the click operation is a service operation.

The previously described application program (referred to as an application below) has an offline service function. That is, the user can start the application on the end-user device and initiate a corresponding service operation in the application.

In the present step, the user can be considered as a user that currently uses the end-user device. The user initiates a service operation, which indicates that the user has passed identity verification of the application, but the user can be an owner (namely, an authorized user) of the end-user device or can be an unauthorized holder (namely, an unauthorized user). Therefore, it is necessary to perform risk control processing on the service operation initiated by the user, that is, perform subsequent steps.

S102. Determine whether the service operation is a risky operation based on recorded historical operation data and at least one of a predetermined risk evaluation rule or risk evaluation model after the service operation is monitored. If yes, perform step S103; otherwise, perform step S104.

In actual applications, if an unauthorized user holds the end-user device, the unauthorized user can perform multiple identity verification operations to attempt to pass identity verification of the application. Although the unauthorized user can finally pass the identity verification, the multiple identity verification operations performed by the unauthorized user reflect an exception of the identity verification process to some extent (it can be considered that, if the holder of the end-user device is an authorized user, the authorized user should pass identity verification of the application at a time except in the case of a misoperation).

Apparently, operation data of various operations performed by the user on the end-user device can be used as an important basis for risk control processing. In actual application scenarios, various operations performed by the user on the end-user device can be various operations performed by the user directly on an application that has an offline payment function, and in this scenario, the application can record and obtain operation data.

Therefore, in this implementation of the present application, the application records historical operation data corresponding to various historical operations performed by the user such as an identity verification operation and a service operation. A process of recording the historical operation data can include the following: The application monitors an operation performed by the user on the application, and determines operation data corresponding to the operation after the operation is monitored, and records the operation data as the historical operation data. The historical operation data includes at least one of a total number of times of identity verification success or failure in a historical time, a number of times of identity verification success or failure within a predetermined time period, behavior data of using an online service by the user, behavior data of using an offline service by the user, and service environment data.

It is worthwhile to note that, because this method is applicable to an offline environment, the historical operation data recorded in the application will be locally stored in the end-user device. A log file can be used for storage. Correspondingly, the application can obtain the previous log file to obtain the historical operation data. It does not constitute a limitation on the present application.

After the historical operation data recorded by the application is obtained, risk determining can be performed on the service operation initiated by the user. In this implementation of the present application, the predetermined risk evaluation rule and/or risk evaluation model can be pre-stored in the application locally. In a possible method, the application locally has a risk evaluation function unit, and the risk evaluation rule and/or the risk evaluation model can be stored in the risk evaluation function unit.

The risk evaluation rule can include evaluation rules for different historical operation data. For example, before the user passes identity verification, if the number of times the user fails to pass identity verification is greater than 3, it is determined that the service operation initiated by the user is risky. In addition, the risk evaluation rule can be a dynamic rule, and can be dynamically adjusted and optimized based on a usage habit of the authorized user.

The risk evaluation model can be obtained through training based on the usage habit of the authorized user and operation data of a large number of determined unauthorized operations and authorized operations. It is not described in detail here. In addition, the risk evaluation model can be a dynamic model, that is, the operation data of the user can be continuously collected, and the risk evaluation model is dynamically adjusted and optimized based on the usage habit of the user.

By using the risk evaluation rule and risk evaluation model, the risk degree of the service operation can be quantized to obtain a corresponding risk characterization value. Obviously, if the current service operation does not meet the usage habit of the user, the risk characterization value obtained by using the risk evaluation model will exceed a risk threshold, and it is determined that the service operation initiated by the user is risky.

Certainly, in actual applications, risk evaluation can be performed on the service operation with reference to the risk evaluation rule and the risk evaluation model.

In addition, the risk evaluation rule and the risk evaluation model can also be dynamically adjusted based on a use environment of the application. The use environment can include time of using the application, a number of times of starting and stopping the application, etc. It does not constitute a limitation on the present application.

Based on the previous content, if it is determined that a service operation is a risky operation, it indicates that the initiator of the service operation is likely an unauthorized user. In this case, to protect the account security of the authorized user, the application refuses to execute the service operation, that is, performs step S103.

If it is determined that the service operation is a non-risky operation, it can be considered that the initiator of the service operation is an authorized user. In this case, the application can execute the service operation, that is, perform step S104.

S103. Refuse to invoke the offline service information.

Once the application refuses to invoke the offline service information, the user cannot perform the offline service. In this implementation of the present application, if the offline service information is displayed in a DOI (including a two-dimensional code, a barcode, etc.) method, the application does not generate the DOI. Certainly, in actual application scenarios, a re-verification operation can further be initiated to the user, and the method is described in the following.

S104. Invoke the offline service information.

In contrast to step S103, the application generates corresponding offline service information to complete a corresponding offline service.

According to the previous steps, in a scenario that a user uses an application to obtain an offline service, when a user holding an end-user device passes identity verification of an application and initiates a service operation, the application does not immediately perform the service operation, but obtains historical operation data of all previous operations performed by the user. It can be considered that there is a certain difference between an operation initiated by an unauthorized user using an application and an operation initiated by an actual owner using the end-user device. Therefore, based on the historical operation data and at least one of a corresponding risk evaluation rule and risk evaluation model, the application can determine whether the service operation initiated by the user is risky. If the service operation is risky, it indicates that the user initiating the service operation is likely an unauthorized user. Consequently, the application refuses to invoke offline service information needed by the offline service, and the user cannot perform the offline service. If the service operation is not risky, it indicates that the user initiating the service operation is likely an authorized user, and the application can invoke the offline service information, so the user completes the offline service.

Compared with the existing technologies, by using the previous method in this implementation of the present application, when a user performs an offline service, a process of performing risk control processing on a service operation of the user is added in addition to identity verification of the application, to form a double guarantee mechanism, thereby effectively improving security in offline service environments.

For the previous content, it is worthwhile to note that, in an optional method of this implementation of the present application, the previous method can be executed by an end-user device operating system. The operating system can open a corresponding application programming interface (API) to the application, so different applications complete offline services by using the API. That is, the end-user device operating system performs risk evaluation on the service operation based on the risk evaluation rule and the risk evaluation model, and opens the API to the applications running on the end-user device, so each application obtains a risk evaluation result from the API. It does not constitute a limitation on the present application.

In the previous content, determining whether the service operation initiated by the user is a risky operation will have a decisive impact on whether the application subsequently performs the service operation. Therefore, the following describes the determining process in this implementation of the present application in detail.

In this implementation of the present application, the process of determining whether a service operation is a risky operation is mainly implemented in two methods:

### Method 1

In actual applications, if a user initiates a service operation, it indicates that the user has passed identity verification of the application, but the user can still be an unauthorized user. This is because the user possibly passes identity verification after performing several times of identity verification, and in this case, the user is more likely to be an unauthorized user. Correspondingly, the service operation initiated by the user is also likely to be a risky operation. That is, if an identity verification operation performed by the user currently using the end-user device has a certain degree of risk, after the user passes identity verification, the service operation initiated by the user also has a corresponding risk.

For example, when a user performs a verification operation for the application, the first five times of verification failed but the sixth time succeeds. In this example, although the user has been successfully verified, it can be considered that the user is likely an unauthorized user because the user makes several attempts to pass the verification. If the user performs an offline service operation by using the application, the service operation is likely risky.

Therefore, a risk degree of an identity verification operation can be determined based on the identity verification operation performed by the user before passing identity verification, to further determine whether a service operation initiated by the user is a risky operation.

In this implementation of the present application, the process of determining whether the service operation is a risky operation includes determining a first identity verification operation related to the service operation, determining a risk characterization value of the first identity verification operation based on a first verification method corresponding to the first identity verification operation, the historical operation data, and at least one of the predetermined risk evaluation rule and risk evaluation model, and determining whether the risk characterization value exceeds a predetermined risk threshold based on the risk characterization value and the predetermined risk threshold; if yes, determining the service operation as a risky operation; otherwise, determining the service operation as a non-risky operation.

The first identity verification operation related to the service operation refers to identity verification operations performed by the user after the last time the user passes identity verification of the application and before the user performs the current service operation. For example, the six verification operations of the user are all first identity verification operations. In addition, the word "first" used in the first identity verification operation is merely used to distinguish from other identity verification operations in the subsequent content, and similar descriptions in the following are to play a similar role. Details are not repeatedly described subsequently.

The first verification method corresponding to the first identity verification operation includes but is not limited to password verification and biometric feature information verification. The risk evaluation rule and/or risk evaluation model can be different when the user uses different verification methods. For example, for the password verification method, more attention is paid to the times of password attempts in the risk evaluation process. A larger number of attempts indicates a higher risk. In the fingerprint verification method, more attention is paid to the detailed feature of the fingerprint image entered by the user in the risk evaluation process. The less the feature of the fingerprint image is, the more likely the fingerprint image is stolen, and the risk of the fingerprint verification operation is higher.

Based on this, the risk degree of the first identity verification operation can be quantized based on the first verification method, the historical operation data, and at least one of the predetermined risk evaluation rule and risk evaluation model, that is, the risk characterization value of the first identity verification operation is determined. It can be understood that the risk characterization value reflects the risk degree of the first identity verification operation, and a higher risk degree indicates a larger risk characterization value.

After the risk degree of the first identity verification operation is quantized, a comparison can be made with the predetermined risk threshold. The risk threshold can be determined by collecting known unauthorized operation data. It does not constitute a limitation on the present application here.

Further, if the risk characterization value of the first identity verification operation exceeds the risk threshold, it can be considered that the first identity verification operation is more possibly initiated by an unauthorized user than an authorized user. Therefore, the application determines that the current service operation is initiated by an unauthorized user and determines the service operation as a risky operation.

If the risk characterization value of the first identity verification operation does not exceed the risk threshold, it can be considered that the first identity verification operation is less possibly initiated by an unauthorized user than an authorized user. Therefore, the application determines that the current service operation is initiated by an authorized user and determines the service operation as a non-risky operation.

### Method 2:

In this method, in actual application scenarios, when an authorized user uses the end-user device, a misoperation can occur or a password can be forgotten. Once these cases occur, the authorized user can also perform several identity verification operations on the end-user device. Apparently, if only method 1 is used to perform risk control processing, the service operation initiated by the authorized user can be rejected, causing inconvenience to the authorized user in use of the end-user device.

Therefore, in method 2, the process of determining whether the service operation is a risky operation includes determining a first identity verification operation related to the service operation; determining a risk characterization value of the first identity verification operation based on a first verification method corresponding to the first identity verification operation, the recorded historical operation data, and at least one of the predetermined risk evaluation rule and risk evaluation model; when the risk characterization value exceeds a predetermined risk threshold, initiating backup identity verification to the user; receiving a second identity verification operation performed by the user based on the backup identity verification, determining a risk characterization value of the second identity verification operation based on a second verification method corresponding to the second identity verification operation, the recorded historical operation data, and at least one of the predetermined risk evaluation rule and risk evaluation model, determining whether the risk characterization value of the second identity verification operation exceeds the predetermined risk threshold, if yes, determining the service operation as a risky operation, otherwise, determining the service operation as a non-risky operation; and determining the service operation as a non-risky operation when the risk characterization value does not exceed the predetermined risk threshold.

The previous method for determining the risk characterization value of the first identity verification operation is consistent with that in method 1. Details are omitted here for simplicity.

After the application determines that the risk characterization value exceeds the predetermined risk threshold, it indicates that the first identity verification operation initiated by the user is risky, but can be caused by a user misoperation or forgotten password. Therefore, in this method, backup identity verification is initiated to the user. The backup identity verification is an offline verification method, that is, the verification process does not need the end-user device to access an external network. The backup identity verification includes but is not limited to password verification, biometric feature information verification, service verification, and historical operation verification.

It is worthwhile to note that the historical operation verification or service verification is based on a historical operation or a historical service operation performed by the user on the end-user device.

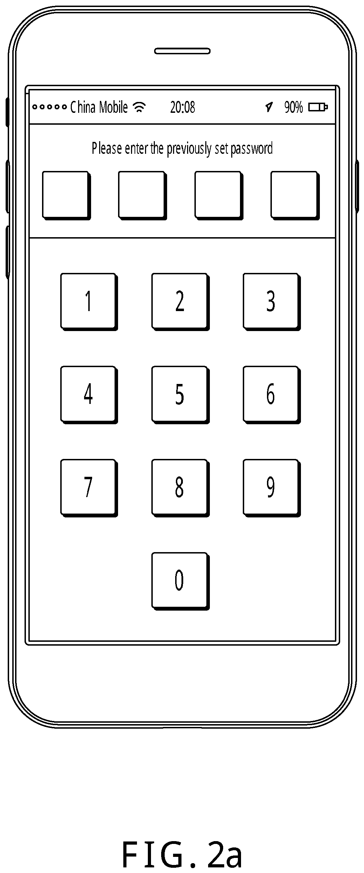

For example, if an authorized user changed a verification password of the application in the historical use process, the backup identity verification can be providing a password input interface in the current interface of the end-user device, as shown in FIG. 2a, and prompting the user to enter the previous verification password.

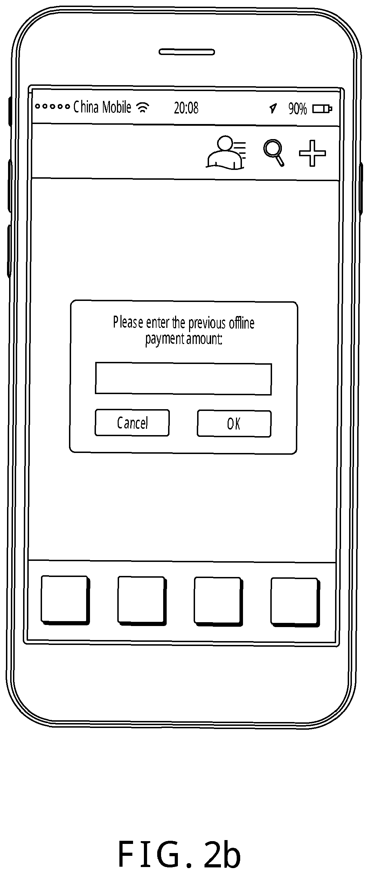

For another example, if an authorized user uses the previous offline service performed by the application and purchases a merchandise worth RMB100, the backup identity verification can be providing a verification interface in the current interface of the end-user device, as shown in FIG. 2b, and prompting the user to enter the amount paid for the previous offline service.

Certainly, the previously described two methods do not constitute a limitation on the present application. Based on the previous examples, the application initiates backup identity verification to the user, and essentially the application has several predetermined corresponding identity verification methods. The application can select a verification method different from the first verification method from the several predetermined identity verification methods to perform backup identity verification. Therefore, the process of initiating backup identity verification to the user includes selecting a second identity verification method from the predetermined identity verification methods based on the first verification method and at least one of the predetermined risk evaluation rule and risk evaluation model to initiate backup identity verification to the user.

After sending backup identity verification to the user, the application receives the second identity verification operation performed by the user based on the backup identity verification. The second identity verification operation here is similar to the first identity verification operation. If the user performs several second identity verification operations, even if the user passes backup identity verification, it can be considered that a risk degree of the second identity verification operation is relatively high. Therefore, the application determines the risk characterization value of the second identity verification operation based on the second verification method corresponding to the second identity verification operation, the historical operation data, and at least one of the predetermined risk evaluation rule and risk evaluation model.

Apparently, if the risk characterization value of the second identity verification operation is still higher than the predetermined risk threshold, it indicates that the user holding the end-user device is highly likely to be an unauthorized user, and the application determines the service operation initiated by the user as a risky operation. If the risk characterization value of the second identity verification operation does not exceed the predetermined risk threshold, it indicates that the user holding the end-user device is likely to be an authorized user, and the application determines the service operation initiated by the user as a non-risky operation.

It is worthwhile to note that if the risk characterization value of the first identity verification operation of the user does not exceed the predetermined risk threshold, it can be considered that the user is an authorized user, and in this case, the end-user device does not initiate backup identity verification to the user.

In method 2, after risk control is added, the backup identity verification method can also be used to perform re-verification on the user, so accuracy of user identity verification can be further improved and security is further enhanced.

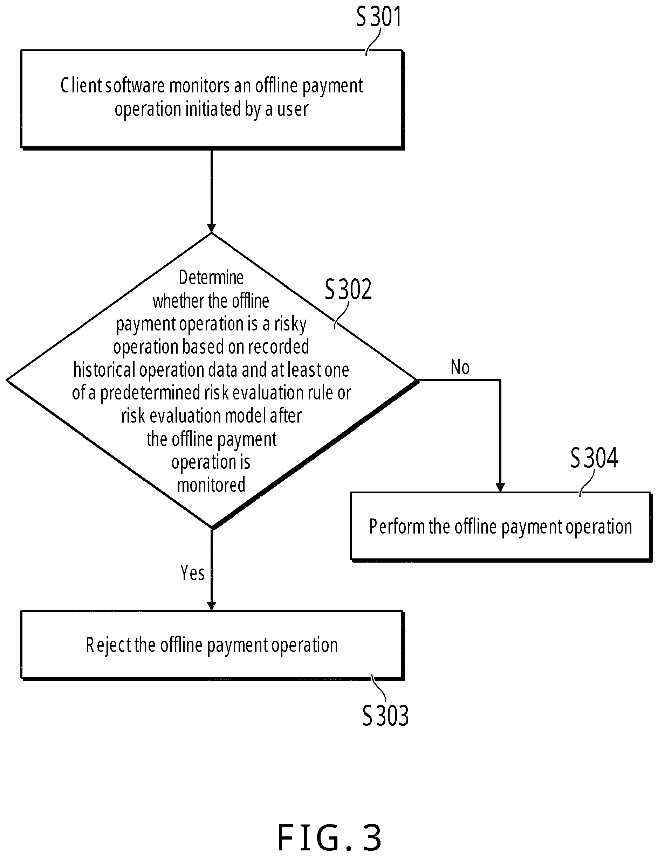

With reference to the previous two determining methods, in actual applications, any determining method can be used as needed to implement identity verification in the offline service process, to ensure the account security of the authorized user. In addition, the previous methods are applicable to an offline payment scenario. Therefore, in this scenario, an implementation of the present application further provides a method for controlling service operation risks, as shown in FIG. 3. The method includes:

S301. Client software monitors an offline payment operation initiated by a user.

S302. Determine whether the offline payment operation is a risky operation based on recorded historical operation data and at least one of a predetermined risk evaluation rule or risk evaluation model after the offline payment operation is monitored; if yes, perform step S303; otherwise, perform step S304.

S303. Reject the offline payment operation.

S304. Perform the offline payment operation.

In this method, an execution body is a client software, and the client software can be application client software running in an end-user device operating system. The user can obtain an offline payment service by using the client software. The client software can be provided by a corresponding service provider (including but not limited to a website, a bank, a telecommunications operator, etc.). It does not constitute a limitation on the present application. The client software has its own identity verification method. For example, the client software itself has a corresponding verification password input interface, and the user can use the client software only after verification succeeds.

In the previous steps, recording the historical operation data includes the following: The client software monitors an operation performed by the user on the client software, and determines operation data corresponding to the operation after the operation is monitored, and records the operation data as the historical operation data.

In this method, the historical operation data can include at least one of a total number of times of identity verification success or failure in a historical time, a number of times of identity verification success or failure within a predetermined time period, behavior data of using an online service by the user, behavior data of using an offline service by the user, and service environment data.

In addition, the risk control processing on the offline payment operation initiated by the client software in this method is similar to that in the previous method. Determining whether the offline payment operation is a risky operation also mainly includes two methods:

### Method 1

Determining whether the offline payment operation is a risky operation includes determining a verification operation related to the offline payment operation; determining a risk characterization value of the verification operation based on a verification method corresponding to the verification operation, the historical operation data, and at least one of the predetermined risk evaluation rule and risk evaluation model; determining whether the risk characterization value exceeds a predetermined risk threshold based on the risk characterization value and the predetermined risk threshold, if yes, determining the offline payment operation as a risky operation, otherwise, determining the offline payment operation as a non-risky operation.

Method 2: the determining whether the offline payment operation is a risky operation includes: determining a verification operation related to the offline payment operation; determining a risk characterization value of the verification operation based on a verification method corresponding to the verification operation, the historical operation data, and at least one of the predetermined risk evaluation rule and risk evaluation model; and when the risk characterization value exceeds a predetermined risk threshold, receiving an identity verification operation performed by the user based on the backup identity verification, determining a risk characterization value of the identity verification operation based on a verification method corresponding to the identity verification operation, the historical operation data, and at least one of the predetermined risk evaluation rule and risk evaluation model and determining whether the risk characterization value of the identity verification operation exceeds the predetermined risk threshold, if yes, determining the offline payment operation as a risky operation; otherwise, determining the offline payment operation as a non-risky operation; or determining the offline payment operation as a non-risky operation when the risk characterization value does not exceed a predetermined risk threshold.

In method 2, for a specific form of backup identity verification, reference can be made to the content shown in FIG. 2a and FIG. 2b, that is, backup identity verification is not limited to password or biometric feature information verification, or can be question and answer verification. The initiating backup identity verification to the user includes selecting an identity verification method different from the verification method from predetermined identity verification methods based on the verification method and at least one of the predetermined risk evaluation rule and risk evaluation model to initiate backup identity verification to the user.

Other content is similar to that in the previous method. Reference can be made to the previous content. Details are omitted here for simplicity.

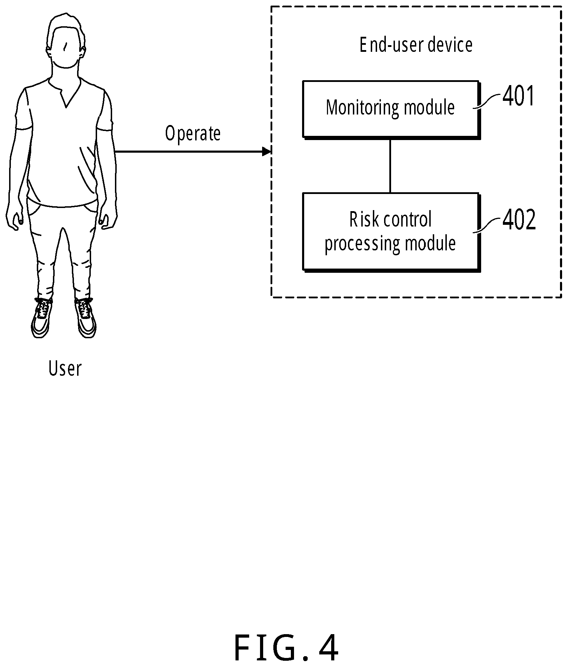

Above is the method for controlling service operation risks according to an implementation of the present application. Based on the same idea, an implementation of the present application further provides a device for controlling service operation risks, as shown in FIG. 4. The device includes: a monitoring module 401, configured to monitor a service operation initiated by a user for invoking offline service information; and a risk control processing module 402, configured to determine whether the service operation is a risky operation based on recorded historical operation data and at least one of a predetermined risk evaluation rule or risk evaluation model after the monitoring module monitors the service operation; if yes, refuse to invoke the offline service information; otherwise, invoke the offline service information.

The risk control processing module 402 monitors an operation performed by the user on the application, and determines operation data corresponding to the operation after the operation is monitored, and records the operation data as the historical operation data.

The previously described historical operation data includes at least one of a total number of times of identity verification success or failure in a historical time, a number of times of identity verification success or failure within a predetermined time period, behavior data of using an online service by the user, behavior data of using an offline service by the user, and service environment data.

In the risk control processing phase, in a method of the implementation of the present application, the risk control processing module 402 determines a first identity verification operation related to the service operation; determines a risk characterization value of the first identity verification operation based on a first verification method corresponding to the first identity verification operation, the historical operation data, and at least one of the predetermined risk evaluation rule and risk evaluation model; and determines whether the risk characterization value exceeds a predetermined risk threshold based on the risk characterization value and the predetermined risk threshold; if yes, determines the service operation as a risky operation; otherwise, determines the service operation as a non-risky operation.

In another method of the implementation of the present application, the risk control processing module 402 determines a first identity verification operation related to the service operation, determines a risk characterization value of the first identity verification operation based on a first verification method corresponding to the first identity verification operation, the recorded historical operation data, and at least one of the predetermined risk evaluation rule and risk evaluation model; when the risk characterization value exceeds a predetermined risk threshold, initiates backup identity verification to the user, receives a second identity verification operation performed by the user based on the backup identity verification, determines a risk characterization value of the second identity verification operation based on a second verification method corresponding to the second identity verification operation, the recorded historical operation data, and at least one of the predetermined risk evaluation rule and risk evaluation model, determines whether the risk characterization value of the second identity verification operation exceeds the predetermined risk threshold, if yes, determines the service operation as a risky operation, otherwise, determines the service operation as a non-risky operation; or determines the service operation as a non-risky operation when the risk characterization value does not exceed a predetermined risk threshold.

Further, the risk control processing module 402 selects a second identity verification method from the predetermined identity verification methods based on the first verification method and at least one of the predetermined risk evaluation rule and risk evaluation model to initiate backup identity verification to the user.

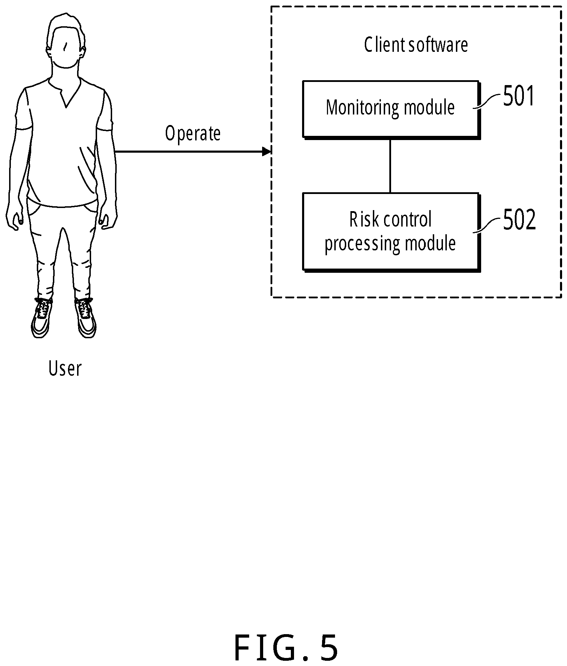

An implementation of the present application further provides a device for controlling service operation risks, and is applicable to client software that has an offline payment function, as shown in FIG. 5. The device includes: a monitoring module 501, configured to monitor an offline payment operation initiated by a user; and a risk control processing module 502, configured to determine whether the offline payment operation is a risky operation based on recorded historical operation data and at least one of a predetermined risk evaluation rule or risk evaluation model after the monitoring module monitors the offline payment operation; if yes, reject the offline payment operation; otherwise, perform the offline payment operation.

The risk control processing module 502 monitors an operation performed by the user on the client software, and determines operation data corresponding to the operation after the operation is monitored, and records the operation data as the historical operation data.

The historical operation data includes at least one of a total number of times of identity verification success or failure in a historical time, a number of times of identity verification success or failure within a predetermined time period, behavior data of using an online service by the user, behavior data of using an offline service by the user, and service environment data.

In a risk control processing phase, in a method of the implementation of the present application, the risk control processing module 502 determines a verification operation related to the offline payment operation, determines a risk characterization value of the verification operation based on a verification method corresponding to the verification operation, the historical operation data, and at least one of the predetermined risk evaluation rule and risk evaluation model, determines whether the risk characterization value exceeds a predetermined risk threshold based on the risk characterization value and the predetermined risk threshold, if yes, determines the offline payment operation as a risky operation, otherwise, determines the offline payment operation as a non-risky operation.

In another method of the implementation of the present application, the risk control processing module 502 determines a verification operation related to the offline payment operation; determines a risk characterization value of the verification operation based on a verification method corresponding to the verification operation, the historical operation data, and at least one of the predetermined risk evaluation rule and risk evaluation model; when the risk characterization value exceeds a predetermined risk threshold, initiates backup identity verification to the user, receives an identity verification operation performed by the user based on the backup identity verification, determines a risk characterization value of the identity verification operation based on a verification method corresponding to the identity verification operation, the historical operation data, and at least one of the predetermined risk evaluation rule and risk evaluation model, and determines whether the risk characterization value of the identity verification operation exceeds the predetermined risk threshold, if yes, determines the offline payment operation as a risky operation; otherwise, determines the offline payment operation as a non-risky operation; or determines the offline payment operation as a non-risky operation when the risk characterization value does not exceed a predetermined risk threshold.

Further, the risk control processing module 502 selects an identity verification method different from the verification method from predetermined identity verification methods based on the verification method and at least one of the predetermined risk evaluation rule and risk evaluation model to initiate backup identity verification to the user.

The present disclosure is described with reference to the flowcharts and/or block diagrams of the method, the device (system), and the computer program product according to the implementations of the present disclosure. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a special-purpose computer, a built-in processor, or a processor of another programmable data processing device to generate a machine, so the instructions executed by the computer or the processor of the another programmable data processing device generate an apparatus for implementing a specific function in one or more flows in the flowcharts and/or in one or more blocks in the block diagrams.

These computer program instructions can be stored in a computer readable memory that can instruct the computer or the another programmable data processing device to work in a specific way, so the instructions stored in the computer readable memory generate an manufacture that includes an instruction apparatus. The instruction apparatus implements a specific function in one or more flows in the flowcharts and/or in one or more blocks in the block diagrams.

These computer program instructions can be loaded onto the computer or the another programmable data processing device, so a series of operations and steps are performed on the computer or the another programmable device, thereby generating computer-implemented processing. Therefore, the instructions executed on the computer or the another programmable device provide steps for implementing a specific function in one or more flows in the flowcharts and/or in one or more blocks in the block diagrams.

In a typical configuration, a computing device includes one or more processors (CPU), an input/output interface, a network interface, and a memory.

The memory can include a non-persistent memory, a random access memory (RAM), a non-volatile memory, and/or another form in a computer readable medium, for example, a read-only memory (ROM) or a flash memory (flash RAM). The memory is an example of the computer readable medium.

The computer readable medium includes persistent, non-persistent, movable, and unmovable media that can implement information storage by using any method or technology. Information can be a computer readable instruction, a data structure, a program module, or other data. An example of a computer storage medium includes but is not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a tape and disk storage or another magnetic storage device or any other non-transmission media that can be configured to store information that a computing device can access. Based on the definition in the present specification, the computer readable medium does not include transitory media (transitory media), for example, a modulated data signal and carrier.

It is worthwhile to further note that the terms "include", "comprise", or their any other variant is intended to cover a non-exclusive inclusion, so a process, a method, a merchandise, or a device that includes a list of elements not only includes those elements but also includes other elements which are not expressly listed, or further includes elements inherent to such process, method, merchandise, or device. An element preceded by "includes a ..." does not, without more constraints, preclude the existence of additional identical elements in the process, method, merchandise, or device that includes the element.

A person skilled in the art should understand that an implementation of the present application can be provided as a method, a system, or a computer program product. Therefore, the present application can use a form of hardware only implementations, software only implementations, or implementations with a combination of software and hardware. In addition, the present application can use a form of a computer program product that is implemented on one or more computer-usable storage media (including but not limited to a disk memory, a CD-ROM, an optical memory, etc.) that include computer-usable program code.

## Claims

1. A method for controlling service operation risks, wherein the method comprises:
monitoring (S101), by an application program on an end-user device, a service operation initiated by a user for invoking offline service information necessary to complete a service offline when the end-user device is disconnected from a network;
determining (S102) whether the service operation is a risky operation based on recorded historical operation data and at least one of a predetermined risk evaluation rule or a risk evaluation model after the service operation is monitored, wherein the recorded historical operation data is stored in the end-user device, wherein the recorded historical operation data comprises behavior data of an authorized user recorded when the authorized user was using the service online when the end-user device was connected to the network;
if yes, refusing (S103) to invoke the offline service information;
otherwise, invoking (S104) the offline service information to complete the service offline.

2. The method according to claim 1, wherein determining (S102) whether the service operation is a risky operation comprises:
determining a first identity verification operation related to the service operation;
determining a risk characterization value of the first identity verification operation based on a first verification method corresponding to the first identity verification operation, the historical operation data, and at least one of the predetermined risk evaluation rule and risk evaluation model;
determining, based on the risk characterization value and a predetermined risk threshold, whether the risk characterization value exceeds the predetermined risk threshold;
if yes, determining the service operation as a risky operation;
otherwise, determining the service operation as a non-risky operation.

3. The method according to claim 1, wherein determining (S102) whether the service operation is a risky operation comprises:
determining a first identity verification operation related to the service operation;
determining a risk characterization value of the first identity verification operation based on a first verification method corresponding to the first identity verification operation, the historical operation data, and at least one of the predetermined risk evaluation rule and risk evaluation model;
initiating backup identity verification to the user when the risk characterization value exceeds a predetermined risk threshold, receiving a second identity verification operation performed by the user based on the backup identity verification, determining a risk characterization value of the second identity verification operation based on a second verification method corresponding to the second identity verification operation, the historical operation data, and at least one of the predetermined risk evaluation rule and risk evaluation model, and determining whether the risk characterization value of the second identity verification operation exceeds the predetermined risk threshold, if yes, determining the service operation as a risky operation; otherwise, determining the service operation as a non-risky operation; or
determining the service operation as a non-risky operation when the risk characterization value does not exceed a predetermined risk threshold.

4. The method according to claim 2 or claim 3, wherein the first identity verification operation comprises an identity verification operation performed by the user after the last time the user passes identity verification of the application and before the user performs the current service operation.

5. The method according to claim 3, wherein initiating backup identity verification to the user comprises:
selecting a second identity verification method from a predetermined identity verification method based on the first verification method and at least one of the predetermined risk evaluation rule and risk evaluation model; and
initiating backup identity verification to the user by using the selected second identity verification method.

6. The method according to any one of claims 1 to 5, wherein recording historical operation data comprises:
monitoring an operation performed by the user on the application program; and
determining operation data corresponding to the operation after the operation is monitored, and recording the operation data as the historical operation data; wherein
the historical operation data comprises at least one of a total number of times of identity verification success or failure in a historical time, a number of times of identity verification success or failure within a predetermined time period, behavior data of using an online service by the user, behavior data of using an offline service by the user, and service environment data.

7. The method according to claim 1, wherein offline service information comprises information needed for performing an offline service, optionally including user account information and a service verification identifier, and wherein the offline service information takes the form of a near field communication, i.e., NFC signal, a unique digital object identifier, i.e., DOI, or a sound wave signal.

8. The method according to claim 1, wherein the risk evaluation rule and the risk evaluation model can also be dynamically adjusted based on a use environment of the application, wherein the use environment can include time of using the application, a number of times of starting and stopping the application.

9. The method according to claim 1, wherein prior to invoking (S104) the offline service information, the method comprises obtaining historical operation data of previous operations performed by the user.

10. The method according to any one of claims 1 to 9, wherein
the application program on the end-user device comprises client software;
the service operation initiated by the user comprises an offline payment operation;
refusing (SI03) to invoke the offline service information comprises rejecting the offline payment operation; and
invoking (S104) the offline service information comprises performing the offline payment operation.

11. A device for controlling service operation risks, wherein the device comprises multiple modules configured to perform the method of any one of claims 1 to 10.

## Patentansprüche

1. Verfahren zum Steuern von Dienstoperationsrisiken, wobei das Verfahren Folgendes umfasst:
Überwachen (S101) einer Dienstoperation, die zum Aufrufen von Offlinedienstinformationen, die erforderlich sind, um einen Dienst offline abzuschließen, wenn eine Endbenutzervorrichtung von einem Netzwerk getrennt ist, von einem Benutzer initiiert wird, durch ein Anwendungsprogramm in der Endbenutzervorrichtung;
Bestimmen (S102) auf Basis von aufgezeichneten historischen Operationsdaten und mindestens einem von einer vorbestimmten Risikobeurteilungsregel oder einem Risikobeurteilungsmodell, nachdem die Dienstoperation überwacht wurde, ob die Dienstoperation eine riskante Operation ist, wobei die aufgezeichneten historischen Operationsdaten in der Endbenutzervorrichtung gespeichert sind, wobei die aufgezeichneten historischen Operationsdaten Verhaltensdaten eines autorisierten Benutzers umfassen, die aufgezeichnet wurden, als der autorisierte Benutzer den Dienst online verwendete, als die Endbenutzervorrichtung mit dem Netzwerk verbunden war;
wenn ja, Ablehnen (S103), die Offlinedienstinformationen aufzurufen;
andernfalls Aufrufen (S104) der Offlinedienstinformationen, um den Dienst offline abzuschließen.

2. Verfahren nach Anspruch 1, wobei das Bestimmen (S102), ob die Dienstoperation eine riskante Operation ist, Folgendes umfasst:
Bestimmen einer ersten Identitätsverifizierungsoperation, die die Dienstoperation betrifft;
Bestimmen eines Risikocharakterisierungswertes der ersten Identitätsverifizierungsoperation auf Basis eines ersten Verifizierungsverfahrens, das der ersten Identitätsverifizierungsoperation entspricht, der historischen Operationsdaten und mindestens einem der vorbestimmten Risikobeurteilungsregel und des Risikobeurteilungsmodells;
Bestimmen auf Basis des Risikocharakterisierungswertes und eines vorbestimmten Risikoschwellwerts, ob der Risikocharakterisierungswert den vorbestimmten Risikoschwellwert überschreitet;
wenn ja, Bestimmen der Dienstoperation als eine riskante Operation;
andernfalls Bestimmen der Dienstoperation als eine nicht riskante Operation.

3. Verfahren nach Anspruch 1, wobei das Bestimmen (S102), ob die Dienstoperation eine riskante Operation ist, Folgendes umfasst:
Bestimmen einer ersten Identitätsverifizierungsoperation, die die Dienstoperation betrifft;
Bestimmen eines Risikocharakterisierungswertes der ersten Identitätsverifizierungsoperation auf Basis eines ersten Verifizierungsverfahrens, das der ersten Identitätsverifizierungsoperation entspricht, der historischen Operationsdaten und mindestens einem der vorbestimmten Risikobeurteilungsregel und des Risikobeurteilungsmodells;
Initiieren einer Backupidentitätsverifizierung für den Benutzer, wenn der Risikocharakterisierungswert einen vorbestimmten Risikoschwellwert überschreitet, Empfangen einer zweiten Identitätsverifizierungsoperation, die vom Benutzer auf Basis der Backupidentitätsverifizierung durchgeführt wird, Bestimmen eines Risikocharakterisierungswertes der zweiten Identitätsverifizierungsoperation auf Basis eines zweiten Verifizierungsverfahrens, das der zweiten Identitätsverifizierungsoperation entspricht, der historischen Operationsdaten und mindestens einem der vorbestimmten Risikobeurteilungsregel und des Risikobeurteilungsmodells und Bestimmen, ob der Risikocharakterisierungswert der zweiten Identitätsverifizierungsoperation den vorbestimmten Risikoschwellwert überschreitet, wenn ja, Bestimmen der Dienstoperation als eine riskante Operation; andernfalls Bestimmen der Dienstoperation als eine nicht riskante Operation; oder
Bestimmen der Dienstoperation als eine nicht riskante Operation, wenn der Risikocharakterisierungswert einen vorbestimmten Risikoschwellwert nicht überschreitet.

4. Verfahren nach Anspruch 2 oder Anspruch 3, wobei die erste Identitätsverifizierungsoperation eine Identitätsverifizierungsoperation umfasst, die vom Benutzer durchgeführt wird, nachdem der Benutzer die Identitätsverifizierung der Anwendung zum letzten Mal besteht und bevor der Benutzer die aktuelle Dienstoperation durchführt.

5. Verfahren nach Anspruch 3, wobei das Initiieren einer Backupidentitätsverifizierung für den Benutzer Folgendes umfasst:
Auswählen eines zweiten Identitätsverifizierungsverfahrens aus einem vorbestimmten Identitätsverifizierungsverfahren auf Basis des ersten Verifizierungsverfahrens und mindestens einem der vorbestimmten Risikobeurteilungsregel und des Risikobeurteilungsmodells und
Initiieren einer Backupidentitätsverifizierung für den Benutzer unter Verwendung des ausgewählten zweiten Identitätsverifizierungsverfahrens.

6. Verfahren nach einem der Ansprüche 1 bis 5, wobei das Aufzeichnen von historischen Operationsdaten Folgendes umfasst:
Überwachen einer Operation, die vom Benutzer im Anwendungsprogramm durchgeführt wird; und
Bestimmen von Operationsdaten, die der Operation nach der Überwachung der Operation entsprechen, und Aufzeichnen der Operationsdaten als die historischen Operationsdaten; wobei
die historischen Operationsdaten mindestens eines von einer Gesamthäufigkeit einer erfolgreichen oder einer fehlgeschlagenen Identitätsverifizierung in einer historischen Zeit, einer Häufigkeit einer erfolgreichen oder fehlgeschlagenen Identitätsverifizierung in einer vorbestimmten Zeitperiode, Verhaltensdaten zum Verwenden eines Onlinedienstes durch den Benutzer, Verhaltensdaten zum Verwenden eines Offlinedienstes durch den Benutzer und Dienstumgebungsdaten umfassen.

7. Verfahren nach Anspruch 1, wobei Offlinedienstinformationen Informationen umfassen, die zum Durchführen eines Offlinedienstes erforderlich sind, die wahlweise Benutzerkontoinformationen und eine Dienstverifizierungskennung beinhalten, und wobei die Offlinedienstinformationen die Form eines Nahfeldkommunikations-, d. h. eines NFC-Signals, einer eindeutigen digitalen Objektkennung, d. h. DOI, oder eines Schallwellensignals annehmen.

8. Verfahren nach Anspruch 1, wobei die Risikobeurteilungsregel und das Risikobeurteilungsmodell auf Basis einer Verwendungsumgebung der Anwendung auch dynamisch angepasst werden können, wobei die Verwendungsumgebung eine Zeit der Verwendung der Anwendung, eine Häufigkeit des Startens und des Stoppens der Anwendung beinhalten kann.

9. Verfahren nach Anspruch 1, wobei das Verfahren vor dem Aufrufen (S104) der Offlinedienstinformationen das Erhalten von historischen Operationsdaten von vorherigen Operationen, die vom Benutzer durchgeführt wurden, umfasst.

10. Verfahren nach einem der Ansprüche 1 bis 9, wobei
das Anwendungsprogramm auf der Endbenutzervorrichtung eine Clientsoftware umfasst;
die vom Benutzer initiierte Dienstoperation eine Offlinezahlungsoperation umfasst;
das Ablehnen (S103), die Offlinedienstinformationen aufzurufen, das Ablehnen der Offlinezahlungsoperation umfasst und
das Aufrufen (S104) der Offlinedienstinformationen das Durchführen der Offlinezahlungsoperation umfasst.

11. Vorrichtung zum Steuern von Dienstoperationsrisiken, wobei die Vorrichtung mehrere Module umfasst, die dazu ausgelegt sind, das Verfahren nach einem der Ansprüche 1 bis 10 durchzuführen.

## Revendications

1. Procédé de contrôle des risques liés aux opérations de service, où le procédé comprend les étapes suivantes :
surveiller (S 101), par un programme d'application sur un dispositif d'utilisateur final, une opération de service initiée par un utilisateur pour invoquer des informations de service hors ligne nécessaires pour terminer un service hors ligne lorsque le dispositif d'utilisateur final est déconnecté d'un réseau ;
déterminer (S102) si l'opération de service est une opération à risque sur la base de données d'opération historiques enregistrées et d'au moins une règle d'évaluation de risque prédéterminée ou d'un modèle d'évaluation de risque après que l'opération de service a été surveillée, où les données d'opération historiques enregistrées sont stockées dans le dispositif d'utilisateur final, où les données d'opération historiques enregistrées comprennent des données de comportement d'un utilisateur autorisé enregistrées lorsque l'utilisateur autorisé utilisait le service en ligne lorsque le dispositif d'utilisateur final était connecté au réseau ;
si oui, refuser (S103) d'invoquer les informations de service hors ligne ;
sinon, invoquer (S104) les informations de service hors ligne pour terminer le service hors ligne.

2. Procédé selon la revendication 1, dans lequel déterminer (S102) si l'opération de service est une opération à risque comprend les étapes suivantes :
déterminer une première opération de vérification d'identité liée à l'opération de service ;
déterminer une valeur de caractérisation de risque de la première opération de vérification d'identité sur la base d'un premier procédé de vérification correspondant à la première opération de vérification d'identité, des données d'opération historiques, et d'au moins un élément parmi la règle d'évaluation de risque et le modèle d'évaluation de risque prédéterminés ;
déterminer, sur la base de la valeur de caractérisation de risque et d'un seuil de risque prédéterminé, si la valeur de caractérisation de risque dépasse le seuil de risque prédéterminé ;
si oui, déterminer l'opération de service comme une opération à risque ;
sinon, déterminer l'opération de service comme une opération non à risque.

3. Procédé selon la revendication 1, dans lequel déterminer (S102) si l'opération de service est une opération à risque comprend les étapes suivantes :
déterminer une première opération de vérification d'identité liée à l'opération de service ;
déterminer une valeur de caractérisation de risque de la première opération de vérification d'identité sur la base d'un premier procédé de vérification correspondant à la première opération de vérification d'identité, des données d'opération historiques, et d'au moins un élément parmi la règle d'évaluation de risque et le modèle d'évaluation de risque prédéterminés ;
initier une vérification d'identité de secours pour l'utilisateur lorsque la valeur de caractérisation de risque dépasse un seuil de risque prédéterminé, recevoir une seconde opération de vérification d'identité effectuée par l'utilisateur sur la base de la vérification d'identité de secours, déterminer une valeur de caractérisation de risque de la seconde opération de vérification d'identité sur la base d'un second procédé de vérification correspondant à la seconde opération de vérification d'identité, des données d'opération historiques, et d'au moins un élément parmi la règle d'évaluation de risque et le modèle d'évaluation de risque prédéterminés, et déterminer si la valeur de caractérisation de risque de la seconde opération de vérification d'identité dépasse le seuil de risque prédéterminé ; si oui, déterminer l'opération de service comme une opération à risque ; sinon, déterminer l'opération de service comme une opération non à risque ; ou
déterminer l'opération de service comme une opération non à risque lorsque la valeur de caractérisation de risque ne dépasse pas un seuil de risque prédéterminé.

4. Procédé selon la revendication 2 ou la revendication 3, dans lequel la première opération de vérification d'identité comprend une opération de vérification d'identité effectuée par l'utilisateur après la dernière fois où l'utilisateur a passé avec succès la vérification d'identité de l'application et avant que l'utilisateur effectue l'opération de service en cours.

5. Procédé selon la revendication 3, dans lequel l'initiation de la vérification d'identité de secours pour l'utilisateur comprend les étapes suivantes :
sélectionner un second procédé de vérification d'identité à partir d'un procédé de vérification d'identité prédéterminé basé sur le premier procédé de vérification et d'au moins un élément parmi la règle d'évaluation de risque et le modèle d'évaluation de risque prédéterminés ; et
initier une vérification d'identité de secours pour l'utilisateur en utilisant le second procédé de vérification d'identité sélectionné.

6. Procédé selon l'une quelconque des revendications 1 à 5, dans lequel l'enregistrement de données historiques d'opération comprend les étapes suivantes :
surveiller une opération effectuée par l'utilisateur sur le programme d'application ; et
déterminer des données d'opération correspondant à l'opération après la surveillance de l'opération, et enregistrer les données d'opération en tant que données d'opération historiques ; où
les données d'opération historiques comprennent au moins un élément parmi un nombre total de fois de succès ou d'échec de vérification d'identité dans un temps d'historique, un nombre de fois de succès ou d'échec de vérification d'identité dans une période de temps prédéterminée, des données de comportement d'utilisation d'un service en ligne par l'utilisateur, des données de comportement d'utilisation d'un service hors ligne par l'utilisateur, et des données d'environnement de service.

7. Procédé selon la revendication 1, dans lequel les informations de service hors ligne comprennent des informations nécessaires à l'exécution d'un service hors ligne, comprenant éventuellement des informations de compte d'utilisateur et un identifiant de vérification de service, et où les informations de service hors ligne prennent la forme d'un signal de communication en champ proche, c'est-à-dire un signal NFC, d'un identifiant d'objet numérique unique, c'est-à-dire un DOI, ou d'un signal d'onde sonore.

8. Procédé selon la revendication 1, dans lequel la règle d'évaluation de risque et le modèle d'évaluation de risque peuvent également être ajustés dynamiquement sur la base d'un environnement d'utilisation de l'application, où l'environnement d'utilisation peut inclure le temps d'utilisation de l'application, un nombre de fois de démarrage et d'arrêt de l'application.

9. Procédé selon la revendication 1, dans lequel, avant d'invoquer (S104) les informations de service hors ligne, le procédé comprend d'obtenir des données d'opération historiques d'opérations précédentes effectuées par l'utilisateur.

10. Procédé selon l'une quelconque des revendications 1 à 9, dans lequel :
le programme d'application sur le dispositif d'utilisateur final comprend un logiciel client ;
l'opération de service initiée par l'utilisateur comprend une opération de paiement hors ligne ;
refuser (S103) d'invoquer les informations de service hors ligne comprend de rejeter l'opération de paiement hors ligne ; et
invoquer (S104) les informations de service hors ligne comprend d'exécuter l'opération de paiement hors ligne.

11. Dispositif pour contrôler les risques liés aux opérations de service, où le dispositif comprend plusieurs modules configurés pour exécuter le procédé de l'une quelconque des revendications 1 à 10.
